# EUROPEAN PATENT SPECIFICATION

(11) **EP 4 095 564 B1**
(45) Date of publication and mention of the grant of the patent: **04.12.2024**
(21) Application number: 22172740.7
(22) Date of filing: 11.05.2022
(51) Int. Cl.: G01S 17/931, B60R 11/00

(54) **VEHICLE SENSOR MOUNTING STRUCTURE**
MONTAGESTRUKTUR FÜR FAHRZEUGSENSOR
STRUCTURE DE MONTAGE DE CAPTEUR D'UN VÉHICULE

(30) Priority: 28.05.2021 JP 2021090405
(43) Date of publication of application: 30.11.2022
(73) Proprietor: TOYOTA JIDOSHA KABUSHIKI KAISHA, Toyota-shi, Aichi-ken, 471-8571 (JP)
(72) Inventor: HAYASAKA, Shoichi, Toyota-shi, 471-8571 (JP); HOKAI, Keisuke, Toyota-shi, 471-8571 (JP); URANO, Hiromitsu, Tyoota-shi, 471-8571 (JP)
(74) Representative: J A Kemp LLP

(56) References cited:
- EP-A1- 2 385 013
- CN-A- 110 979 194
- JP-A- 2017 161 363
- US-A- 5 808 728
- US-A1- 2011 010 040
- US-A1- 2018 086 280

## Description

### BACKGROUND OF THE INVENTION

### 1. Field of the Invention

The invention relates to a vehicle sensor mounting structure.

### 2. Description of Related Art

WO 2018/146992 is known as a technical document relating to a vehicle sensor mounting structure. This publication describes a structure in which a light detection and ranging (LiDAR) device for emission in a level direction is embedded in a bumper portion at a forward portion of a vehicle.
EP 2 385 013 A1 shows a vehicle sensor mounting structure according to the preamble of claim 1, and discloses an industrial truck with a device for monitoring the load during transportation and method for monitoring the load.

### SUMMARY OF THE INVENTION

However, when a LiDAR device is embedded in the bumper portion of a vehicle or the like, as in the structure of the related art described above, there is a possibility that the detection range of the LiDAR device is greatly blocked when an object such as a pedestrian or a motorcycle is in close proximity of the bumper portion of the vehicle, and recognition of objects in the surroundings of the vehicle is affected.

A vehicle sensor mounting structure according to a first aspect of the invention includes a vehicle; and a long-range light detection and ranging (LiDAR) device mounted on a peripheral edge portion of a roof of the vehicle, the long-range LiDAR device having a detection range expanding diagonally downward as viewed from the roof, the detection range including a part of an outer peripheral face of the vehicle body, the long-range LiDAR device being configured to detect an object within the detection range, and the long-range LiDAR device having a lower limit of detection distance that is not less than 10 cm and not more than 1 m.

According to the first aspect, the vehicle sensor mounting structure includes the long-range LiDAR device that is mounted on the peripheral edge portion of the roof of the vehicle and that has the detection range expanding diagonally downward as viewed from the roof, and detects objects within the detection range. The long-range LiDAR device has a lower limit of detection distance that is not less than 10 cm and not more than 1 m, and the detection range includes part of the outer peripheral face of the vehicle body. In comparison with when a LiDAR device is embedded in a bumper portion or the like of the vehicle, the long-range LiDAR device can transmit light from a position that is distant from an object such as a pedestrian or the like coming into close proximity with the vehicle, and accordingly the detection range can be suppressed from being greatly blocked.

In the above aspect, a mounting height of the long-range LiDAR device may be not less than 1.8 m. According to this vehicle sensor mounting structure, the mounting height of the long-range LiDAR device from the road surface is not less than 1.8 m, and accordingly the detection range can be suppressed from being greatly blocked even when an object such as a pedestrian comes into close proximity of the vehicle.

In the above aspect, the detection angle of the long-range LiDAR device may be less than 180°. According to this vehicle sensor mounting structure, the long-range LiDAR device is mounted on the peripheral edge portion of the roof of the vehicle and has a detection range that expands diagonally downward as viewed from the roof. Accordingly, even a narrow-angle long-range LiDAR device that is readily procurable and that has a detection angle of less than 180° can secure an area of a detection range, which is appropriate for detecting an object on the road surface.

In the above aspect, the peripheral edge portion of the roof may include a portion of the roof within a first distance from an outer peripheral end that is a boundary between the roof and the outer peripheral face.

In the above aspect, the peripheral edge portion of the roof may include a portion of the outer peripheral face within a second distance from an outer peripheral end that is a boundary between the roof and the outer peripheral face.

In the above embodiment, the object may include a pedestrian, a bicycle, or a motorcycle, in close proximity to the vehicle.

In the above aspect, the mounting height may be a height from a road surface to a photoreceptor or a center point of the long-range LiDAR device.

In the above aspect, the long-range LiDAR device may be mounted on the vehicle via a bracket; and the mounting height that is a height from a road surface to a photoreceptor or a center point of the long-range LiDAR device mounted on the vehicle via the bracket may be not less than 1.8 m.

According to the first aspect of the invention, in comparison with when a LiDAR device is embedded in a bumper portion or the like of a vehicle, the detection range can be suppressed from being greatly blocked even when an object such as a pedestrian or the like comes into close proximity of the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A is a view from in front of a vehicle, illustrating a vehicle sensor mounting structure according to a first embodiment;
FIG. 1B is a plan view for description of a detection range of a long-range LiDAR device as viewed from above the vehicle;
FIG. 2A is a view from in front of a vehicle, illustrating an example of a vehicle sensor mounting structure according to related art;
FIG. 2B is a plan view for description of a detection range of a close-range LiDAR device as viewed from above the vehicle;
FIG. 3A is a diagram for description of an example when an object is in close proximity, with regard to vehicle sensor mounting structure according to related art;
FIG. 3B is a diagram for description of an example when an object is in close proximity, with regard to the vehicle sensor mounting structure according to the first embodiment;
FIG. 4A is a sideward view of the vehicle, illustrating a vehicle sensor mounting structure according to a second embodiment;
FIG. 4B is a plan view for description of a detection range of the long-range LiDAR device as viewed from above the vehicle;
FIG. 5A is a sideward view of the vehicle, illustrating an example of the vehicle sensor mounting structure according to related art;
FIG. 5B is a plan view for description of a detection range of the close-range LiDAR device as viewed from above the vehicle;
FIG. 6A is a diagram for description of an example when an object is in close proximity, with regard to the vehicle sensor mounting structure according to related art; and
FIG. 6B is a diagram for description of an example when an object is in close proximity, with regard to the vehicle sensor mounting structure according to the second embodiment.

### DETAILED DESCRIPTION OF EMBODIMENTS

An embodiment of the invention will be described below with reference to the drawings. In each figure, an XYZ orthogonal coordinate system is shown in which a vehicle front-rear direction is an X-axis, a vehicle width direction is a Y-axis, and a vehicle height direction is a Z-axis.

### First Embodiment

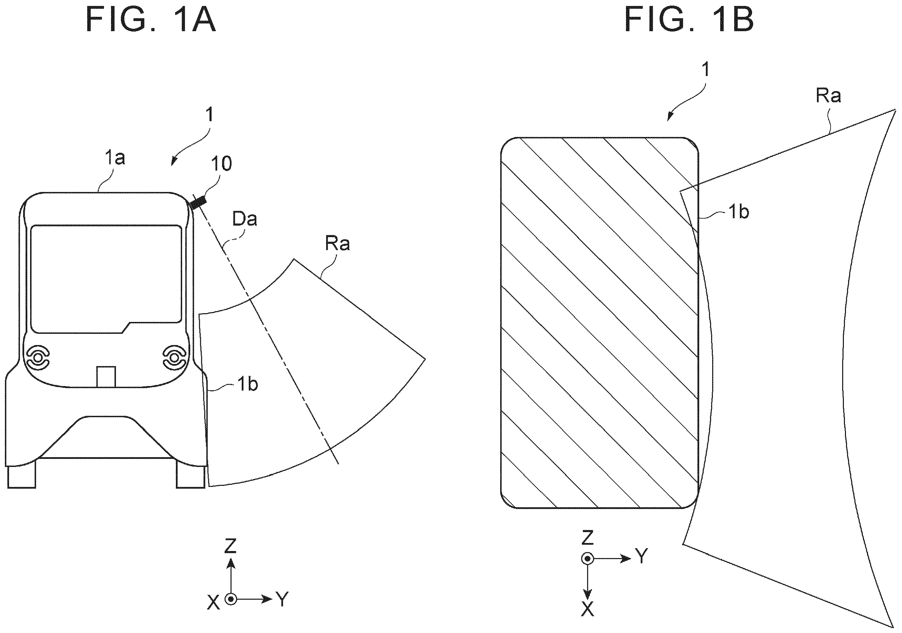

FIG. 1A is a view from in front of a vehicle, illustrating a vehicle sensor mounting structure according to a first embodiment. FIG. 1A illustrates a vehicle 1, a roof 1a of the vehicle 1, a side face (a part of an outer peripheral face) 1b of the vehicle 1, a long-range LiDAR device 10, a detection axis Da of the long-range LiDAR device 10, and a detection range Ra of the long-range LiDAR device 10. The outer peripheral face includes front face, rear face, and side face of the vehicle 1.

The vehicle 1 illustrated in FIG. 1A can be, for example, a microbus-like vehicle or a van-like vehicle. The height of the vehicle 1 is not less than 1.8 m, as an example. The vehicle type and the shape of the vehicle 1 are not limited in particular, as long as the vehicle sensor mounting structure according to the first embodiment can be employed.

As illustrated in FIG. 1A, a long-range LiDAR device 10 is mounted on the vehicle 1. The long-range LiDAR device 10 is detection equipment that detects objects in the surroundings of the vehicle by using light. LiDAR device is a sensor which transmits light to the surroundings of the vehicle, and objects are detected by receiving the light reflected from the objects in the surroundings of the vehicle 1.

The long-range LiDAR device 10 is mounted on a peripheral edge portion of the roof 1a of the vehicle 1. The roof 1a is a ceiling portion of a vehicle body of the vehicle 1. The peripheral edge portion of the roof 1a includes a portion (range) of the roof 1a within a first distance from an outer peripheral end of the roof 1a. The outer peripheral end of the roof 1a is an end portion of the roof 1a that forms a boundary between the roof 1a and the outer peripheral face (front face, rear face, and side face) of the vehicle body. The first distance may be 10 cm, 20 cm, or 30 cm.

As an example, the long-range LiDAR device 10 is mounted on the vehicle 1 such that the long-range LiDAR device 10 is at a position that is at a height of not less than 1.8 m from the road surface. The height reference point is, for example, a photoreceptor of the long-range LiDAR device 10. The height reference point may be a center point of the long-range LiDAR device 10. The long-range LiDAR device 10 may be mounted on the vehicle 1 such that the long-range LiDAR device 10 is at a position that is at a height of not less than 2.5 m, or may be mounted on the vehicle 1 such that the long-range LiDAR device 10 is at a position that is at a height of not less than 3 m. The long-range LiDAR device 10 may be mounted on the vehicle 1 via a bracket. The long-range LiDAR device 10 may be mounted on the vehicle 1 such that the long-range LiDAR device 10 is at a position that is at a height of not less than 1.8 m by adding the height of the bracket (that is, the length of the bracket in the up-down direction when the bracket is mounted on the vehicle 1) to the height of the roof 1a of the vehicle 1. The up-down direction is the same as the Z axis direction.

The long-range LiDAR device 10 is a LiDAR device having a lower limit of detection distance of not less than 10 cm and not more than 1 m. Here, a LiDAR device having a lower limit of detection distance of not less than 10 cm and not more than 1 m is defined as a long-range LiDAR device. A long-range LiDAR device 10 detects a detection point cloud corresponding to a distance shorter than a certain distance due to internal reflection even when no object exists at the certain distance. The lower limit of the detection distance is determined by the certain distance. Note that the upper limit of the detection distance is not limited in particular.

The detection range Ra of the long-range LiDAR device 10 is a range beyond the lower limit of the detection distance. The detection axis Da of the long-range LiDAR device 10 is an axial line extending in the detection direction of the long-range LiDAR device 10. The angle formed by the detection axis Da and the road surface is not limited in particular, but can be 30°, as an example.

The long-range LiDAR device 10 according to the first embodiment is mounted on the outer peripheral end of the side of the roof 1a of the vehicle 1, and has the detection range Ra that expands diagonally downward as viewed from the roof 1a such that the long-range LiDAR device 10 detects objects in the surroundings (in the side) of the vehicle 1. The detection angle of the long-range LiDAR device 10 can be less than 180°. The detection angle may be 120°, as an example.

As illustrated in FIG. 1A, the detection range Ra of the long-range LiDAR device 10 is a range from the long-range LiDAR device 10 beyond the lower limit of the detection distance as viewed from in front of the vehicle 1 (in X-axis direction), and expands in a fan shape centered on the detection axis Da. The detection range Ra includes part of the side face (outer peripheral face) 1b of the vehicle 1.

FIG. 1B is a plan view for description of the detection range Ra of the long-range LiDAR device 10 as viewed from above the vehicle. As illustrated in FIG. 1B, the detection range Ra of the long-range LiDAR device 10 broadly covers the range adjacent to the side of the vehicle 1.

Next, a vehicle sensor mounting structure according to the related art will be described for comparison with the vehicle sensor mounting structure according to the first embodiment. A close-range LiDAR device is used in the vehicle sensor mounting structure according to the related art.

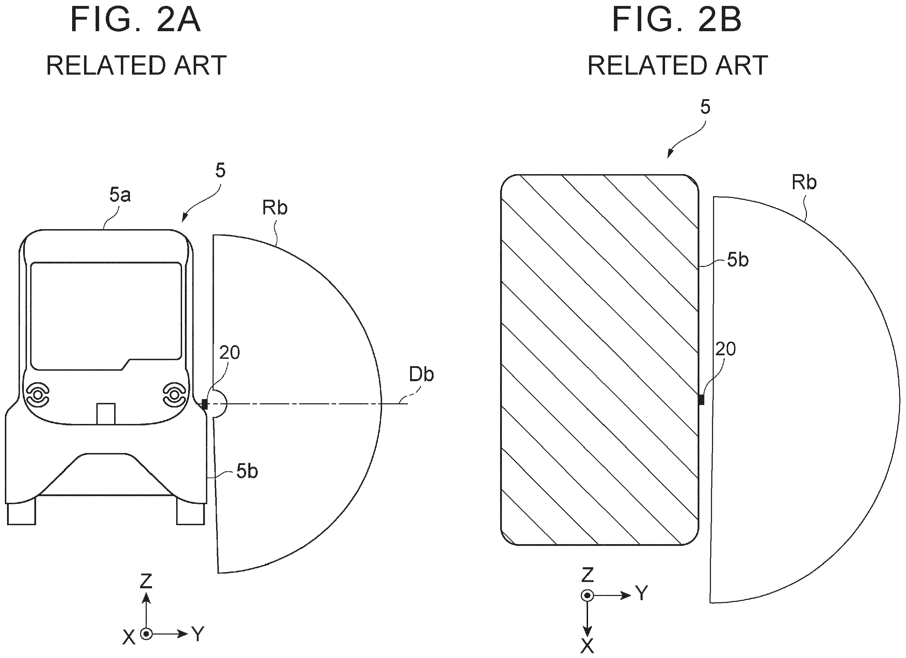

FIG. 2A is a view from in front of a vehicle, illustrating an example of the vehicle sensor mounting structure according to the related art. FIG. 2A illustrates a vehicle 5, a roof 5a of the vehicle 5, a side face 5b of the vehicle 5, a close-range LiDAR device 20, a detection axis Db of the close-range LiDAR device 20, and a detection range Rb of the close-range LiDAR device 20.

As illustrated in FIG. 2A, the close-range LiDAR device 20 is mounted on the side face 5b of the vehicle 5 in the close-range LiDAR device mounting structure according to the related art. Here, a LiDAR device having the lower limit of detection distance is less than 10 cm is defined as a close-range LiDAR device. The close-range LiDAR device 20 is mounted, for example, on a position that is at the same height of a bumper portion of the vehicle 5. As an example, the close-range LiDAR device 20 has a substantially semicircular detection range Rb expanding toward the side of the vehicle 5. The detection range Rb of the close-range LiDAR device 20 does not include the side face 5b of the vehicle 5.

FIG. 2B is a plan view for description of the detection range Rb of the close-range LiDAR device 20 as viewed from above the vehicle. As illustrated in FIG. 2B, the detection range Rb of the close-range LiDAR device 20 is, as an example, a semicircular range as viewed from above the vehicle.

According to the vehicle sensor mounting structure of the first embodiment described above, the long-range LiDAR device 10 is mounted on the peripheral edge portion of the roof 1a of the vehicle 1. Additionally, the long-range LiDAR device 10 has the detection range Ra expanding diagonally downward as viewed from the roof 1a, and detects objects in the surroundings of the vehicle 1. The detection distance lower limit of the long-range LiDAR device 10 is not less than 10 cm and not more than 1 m, and the detection range Ra includes part of the side face 1b of the vehicle 1. In comparison with when a close-range LiDAR device is mounted on a position that is at the same height of a bumper portion of the vehicle 5 (FIGS. 2A and 2B), for example, even when an object 50 such as a pedestrian or the like comes into close proximity with the vehicle, the long-range LiDAR device 10 can transmit light from a position that is distant from the object 50, and accordingly the detection range can be suppressed from being greatly blocked.

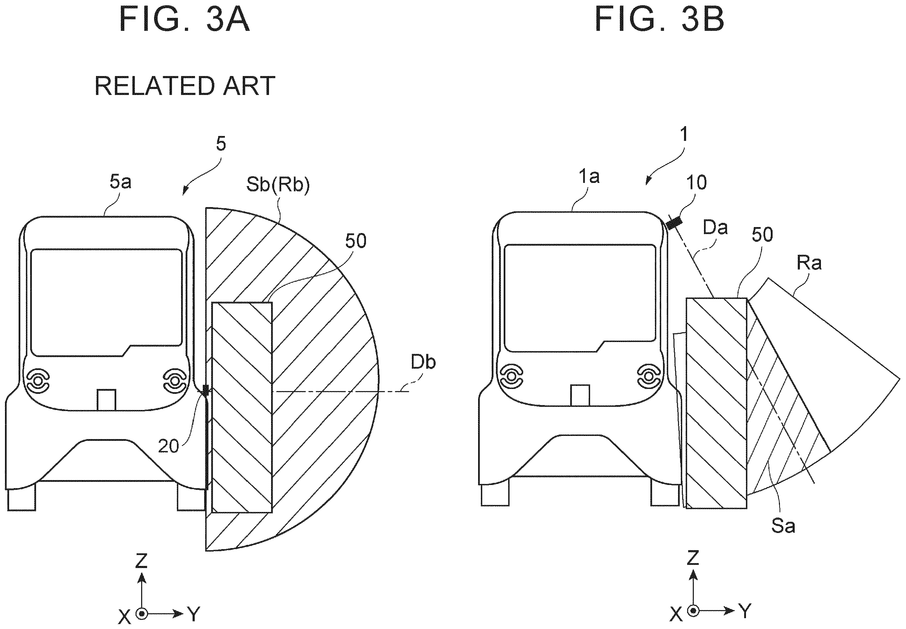

Specific effects of the vehicle sensor mounting structure according to the first embodiment will be described with reference to FIGS. 3A and 3B. First, FIG. 3A is a diagram for description of an example when an object is in close proximity, with regard to the vehicle sensor mounting structure according to the related art. FIG. 3A illustrates the object 50 and a blocking range Sb that is a range blocked by the object 50 in the detection range Rb of the close-range LiDAR device 20. The object 50 is an object such as a pedestrian, a bicycle, or a motorcycle that is in close proximity to the vehicle 5. The object 50 may be a construction pole, a utility pole, or some other structure.

As illustrated in FIG. 3A, in the vehicle sensor mounting structure according to the related art, the entire detection range Rb of the close-range LiDAR device 20 is blocked by the object 50 in close proximity to the vehicle 5.

FIG. 3B is a diagram for description of an example when an object 50 is in close proximity, with regard to the vehicle sensor mounting structure according to the first embodiment. FIG. 3B illustrates the object 50 and a blocking range Sa that is the range blocked by the object 50 in the detection range Ra of the long-range LiDAR device 10.

As illustrated in FIGS. 3A and 3B, according to this vehicle sensor mounting structure, even when an object 50 such as a pedestrian comes into close proximity of the long-range LiDAR device 10 mounted on the vehicle 1, the detection range Ra of the long-range LiDAR device 10 is not completely blocked, and accordingly a region on the other side of the object 50 as viewed from the vehicle 1 can be detected. Accordingly, when there is a bicycle or the like, for example, rapidly approaching the vehicle 1 on the other side of the object 50, the long-range LiDAR device 10 can detect the bicycle or the like.

Also, according to this vehicle sensor mounting structure, the mounting height of the long-range LiDAR device 10 from the road surface is not less than 1.8 m, and accordingly the detection range Ra can be suppressed from being greatly blocked even when an object 50 such as a pedestrian comes into close proximity of the vehicle 1. Further, according to this vehicle sensor mounting structure, the long-range LiDAR device 10 is mounted on the peripheral edge portion of the roof 1a of the vehicle 1 and has the detection range Ra that expands diagonally downward as viewed from the roof 1a. Accordingly, even a narrow-angle long-range LiDAR device 10 that is readily procurable and that has a detection angle of less than 180° can secure an area of a detection range Ra, which is appropriate for detecting an object on the road surface.

Also, it is difficult to detect or recognize the object 50 by the close-range LiDAR device 20, since noise is generated in detection at extremely close distances. On the other hand, according to the vehicle sensor mounting structure of the first embodiment, the long-range LiDAR device 10 can detect or recognize the object 50 with precision, by keeping a distance from the object 50 and detecting the object 50 from the peripheral edge portion of the roof 1a of the vehicle 1. Furthermore, according to the vehicle sensor mounting structure of the first embodiment, mounting the close-range LiDAR device 20 is no longer indispensable. Eliminating the need for developing and mounting the close-range LiDAR device 20 enables reduction in costs.

Also, according to the vehicle sensor mounting structure of the first embodiment, the long-range LiDAR device 10 has higher intensity per beam than the close-range LiDAR device 20, and accordingly low-reflection objects can be detected as well. Further, the long-range LiDAR device 10 has high resolution, and accordingly even small fallen objects can be easily detected. Further, providing the long-range LiDAR device 10 on the peripheral edge portion of the roof 1a enables the occurrence of blind spots due to the vehicle body shape of the vehicle 1 to be suppressed.

### Second Embodiment

Next, a vehicle sensor mounting structure according to a second embodiment will be described with reference to the drawings. The vehicle sensor mounting structure according to the second embodiment is different from the first embodiment in that a long-range LiDAR device 11 is mounted on a front side of the vehicle 1.

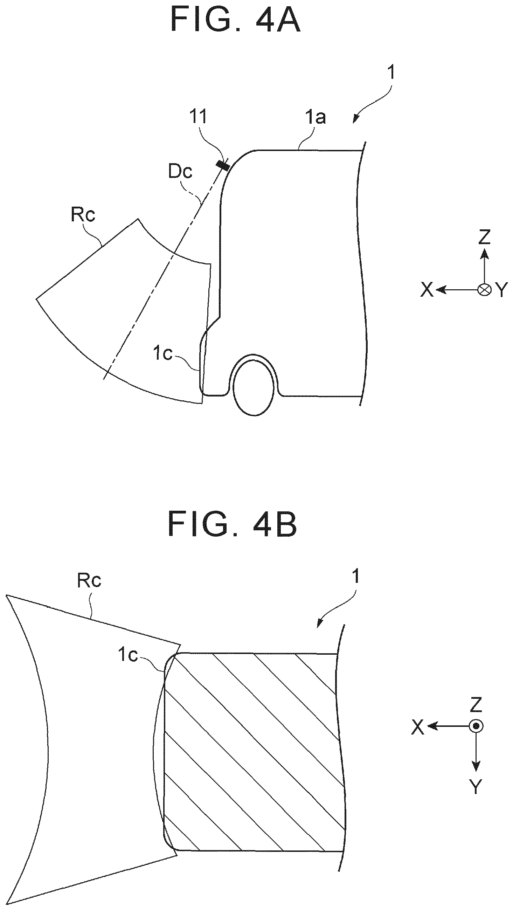

FIG. 4A is a sideward view of the vehicle, illustrating the vehicle sensor mounting structure according to the second embodiment. As illustrated in FIG. 4A, in the vehicle sensor mounting structure according to the second embodiment, the long-range LiDAR device 11 is mounted on the forward outer peripheral end of the roof 1a of the vehicle 1. The long-range LiDAR device 11 has a detection range Rc that expands diagonally downward as viewed from the roof 1a such that the long-range LiDAR device 11 detects objects in the surroundings of (forward of) the vehicle 1. The configuration of the long-range LiDAR device 11 can be the same as that of the long-range LiDAR device 10, for example, and accordingly description thereof will be omitted. The definition of a long-range LiDAR device is the same as in the first embodiment.

The detection range Rc of the long-range LiDAR device 11 is a range from the long-range LiDAR device 11 beyond the lower limit of the detection distance as viewed to the side of the vehicle 1 (in Y-axis direction), and expands in a fan shape centered on a detection axis Dc. The detection range Rc includes part of the front face (a part of the outer peripheral face) 1c of the vehicle 1.

FIG. 4B is a plan view for description of the detection range Rc of the long-range LiDAR device 11 as viewed from above the vehicle. As illustrated in FIG. 4B, the detection range Rc of the long-range LiDAR device 11 broadly covers the range adjacent forward of the vehicle 1.

Next, the vehicle sensor mounting structure according to the related art will be described for comparison with the vehicle sensor mounting structure according to the second embodiment. A close-range LiDAR device is used in the vehicle sensor mounting structure according to the related art.

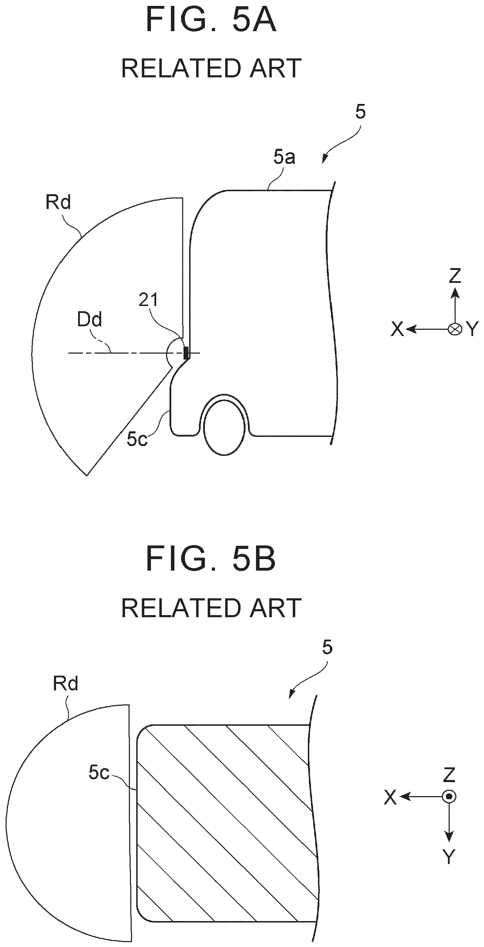

FIG. 5A is a sideward view of the vehicle, illustrating an example of the vehicle sensor mounting structure according to the related art. FIG. 5A illustrates a front face 5c of the vehicle 5, a close-range LiDAR device 21, a detection axis Dd of the close-range LiDAR device 21, and a detection range Rd of the close-range LiDAR device 21.

As illustrated in FIG. 5A, the close-range LiDAR device 21 is mounted on the front face 5c of the vehicle 5 in the close-range LiDAR device mounting structure according to the related art. The close-range LiDAR device 21 is, for example, the same as that in FIG. 2A in the first embodiment. The close-range LiDAR device 21 is mounted, for example, on a bumper portion of the vehicle 5. As an example, the close-range LiDAR device 21 has the substantially semicircular detection range Rd expanding forward from the vehicle 5. The detection range Rd of the close-range LiDAR device 21 does not include the front face 5c of the vehicle 5.

FIG. 5B is a plan view for description of the detection range Rd of the close-range LiDAR device 21 as viewed from above the vehicle. As illustrated in FIG. 5B, the detection range Rd of the close-range LiDAR device 21 is, as an example, a semicircular range as viewed from above the vehicle.

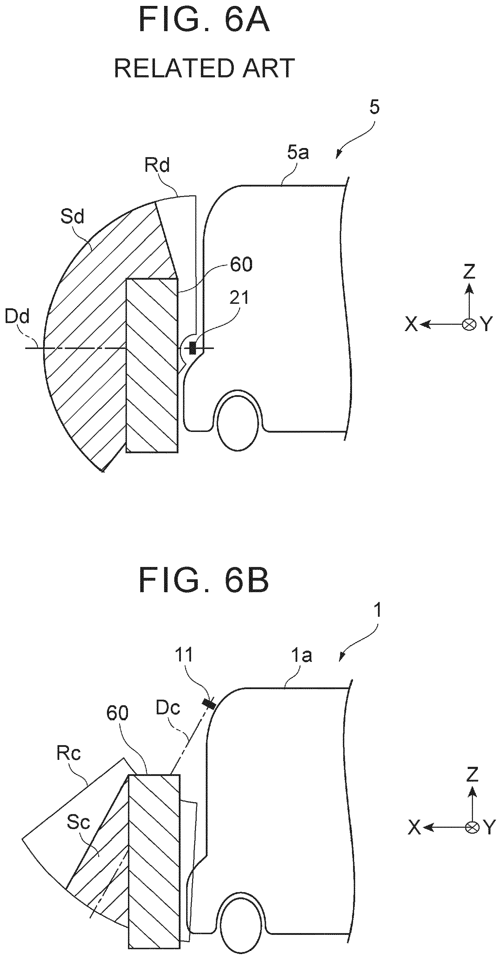

According to the vehicle sensor mounting structure according to the second embodiment described above, the same advantages as those of the first embodiment can be obtained. Specific effects of the vehicle sensor mounting structure according to the second embodiment will be described with reference to FIGS. 6A and 6B. First, FIG. 6A is a diagram for description of an example when an object is in close proximity, with regard to the vehicle sensor mounting structure according to the related art. FIG. 6A illustrates an object 60 and a blocking range Sd that is a range blocked by the object 60 in the detection range Rd of the close-range LiDAR device 21. The object 60 is the same as the object 50 in the first embodiment.

As illustrated in FIG. 6A, in the vehicle sensor mounting structure of the related art, a greater part of the detection range Rd of the close-range LiDAR device 21 is blocked by the object 60 that has come into close proximity of the vehicle 5, and the other side of the object 60 is undetectable.

FIG. 6B is a diagram for description of an example when the object 60 is in close proximity, with regard to the vehicle sensor mounting structure according to the second embodiment. FIG. 6B illustrates the object 60 and a blocking range Sc that is a range blocked by the object 60 in the detection range Rc of the long-range LiDAR device 11.

As illustrated in FIGS. 6A and 6B, according to the vehicle sensor mounting structure of the second embodiment, even when the object 60 such as a pedestrian comes into close proximity of the long-range LiDAR device 11 mounted on a vehicle 1, a greater part of the detection range Rc of the long-range LiDAR device 11 is not blocked, and accordingly the region on the other side of the object 60 as viewed from the vehicle 1 can be detected. Accordingly, when there is a bicycle or the like, for example, rapidly approaching the vehicle 1 on the other side of the object 60, the long-range LiDAR device 11 can detect the bicycle or the like.

Although embodiments of the invention have been described above, the invention is not limited to the above-described embodiments, but to the scope of the appended claims.

Although a case is described in the first embodiment in which the long-range LiDAR device 10 is mounted on the left side of the vehicle 1, the same advantages can be obtained when the long-range LiDAR device 10 is mounted on the right side of the vehicle 1, as well. In the same way, although a case is described in the second embodiment in which the long-range LiDAR device 11 is mounted on the front side of the vehicle 1, the same advantages can be obtained when the long-range LiDAR device 11 is mounted on the rear side of the vehicle 1, as well.

The mounting positions of the long-range LiDAR device 10 and 11 are not limited to the positions illustrated in the drawings either, and may be any position as long as the position is on the peripheral edge portion of the roof 1a of the vehicle 1. The detection angle of the long-range LiDAR device 10 and 11 is not limited to less than 180°, and may be a detection angle not less than 180°.

## Claims

1. A vehicle sensor mounting structure comprising:
a vehicle (1); and
a LiDAR device (10, 11) mounted on a peripheral edge portion of a roof (1a) of the vehicle (1),
the LiDAR device having a detection range (Ra, Rc) expanding diagonally downward as viewed from the roof (1a),
the LiDAR device being configured to detect an object (50, 60) within a detection range (Ra, Rc), and **characterized in**
the detection range (Ra, Rc) including a part of an outer peripheral face (1b, 1c) of a vehicle body of the vehicle, and
the LiDAR device being a long-range LiDAR device defined by having a lower limit of detection distance that is not less than 10 cm and not more than 1 m.

2. The vehicle sensor mounting structure according to claim 1, wherein a mounting height of the long-range LiDAR device (10, 11) is not less than 1.8 m.

3. The vehicle sensor mounting structure according to claim 1 or 2, wherein a detection angle of the long-range LiDAR device (10, 11) is less than 180°.

4. The vehicle sensor mounting structure according to claim 1, wherein the peripheral edge portion of the roof (1a) includes a portion of the roof (1a) within a first distance from an outer peripheral end that is a boundary between the roof (1a) and the outer peripheral face (1b, 1c).

5. The vehicle sensor mounting structure according to claim 1, wherein the peripheral edge portion of the roof (1a) includes a portion of the outer peripheral face (1b, 1c) within a second distance from an outer peripheral end that is a boundary between the roof (1a) and the outer peripheral face (1b, 1c).

6. The vehicle sensor mounting structure according to claim 1, wherein the object (50, 60) includes a pedestrian, a bicycle, or a motorcycle, in close proximity of the vehicle (1).

7. The vehicle sensor mounting structure according to claim 2, wherein the mounting height is a height from a road surface to a photoreceptor or a center point of the long-range LiDAR device (10, 11).

8. The vehicle sensor mounting structure according to claim 2, wherein:
the long-range LiDAR device (10, 11) is mounted on the vehicle (1) via a bracket; and
the mounting height that is a height from a road surface to a photoreceptor or a center point of the long-range LiDAR device (10, 11) mounted on the vehicle (1) via the bracket is not less than 1.8 m.

9. The vehicle sensor mounting structure according to any of the preceding claims, wherein:
the height of the vehicle (1) is not less than 1.8 m.

10. The vehicle sensor mounting structure according to any of the preceding claims, wherein:
the vehicle (1) is a microbus-like vehicle or a van-like vehicle.

## Patentansprüche

1. Fahrzeugsensormontagestruktur, umfassend:
ein Fahrzeug (1); und
eine LiDAR-Vorrichtung (10, 11), die an einem Umfangsrandabschnitt eines Daches (1a) des Fahrzeugs (1) montiert ist,
wobei diese LiDAR-Vorrichtung einen Erfassungsbereich (Ra, Rc) aufweist, der sich diagonal nach unten ausdehnt, wenn von dem Dach (1a) aus betrachtet,
die LiDAR Vorrichtung dazu konfiguriert ist, ein Objekt (50, 60) innerhalb eines Erfassungsbereichs (Ra, Rc) zu erfassen, und **dadurch gekennzeichnet, dass**
der Erfassungsbereich (Ra, Rc) einen Teil einer äußeren Umfangsfläche (1b, 1c) einer Karosserie des Fahrzeugs beinhaltet, und
die LiDAR-Vorrichtung eine Langstrecken-LiDAR-Vorrichtung ist, die durch Aufweisen einer unteren Grenze eines Erfassungsabstands definiert ist, die nicht kleiner als 10 cm und nicht größer als 1 m ist.

2. Fahrzeugsensormontagestruktur nach Anspruch 1, wobei eine Montagehöhe der Langstrecken-LiDAR-Vorrichtung (10, 11) nicht weniger als 1,8 m beträgt.

3. Fahrzeugsensormontagestruktur nach Anspruch 1 oder 2, wobei ein Erfassungswinkel der Langstrecken-LiDAR Vorrichtung (10, 11) weniger als 180° beträgt.

4. Fahrzeugsensormontagestruktur nach Anspruch 1, wobei der Umfangsrandabschnitt des Daches (1a) einen Abschnitt des Daches (1a) innerhalb eines ersten Abstands von einem äußeren Umfangsende beinhaltet, das eine Grenze zwischen dem Dach (1a) und der äußeren Umfangsfläche (1b, 1c) ist.

5. Fahrzeugsensormontagestruktur nach Anspruch 1, wobei der Umfangsrandabschnitt des Daches (1a) einen Abschnitt der äußeren Umfangsfläche (1b, 1c) innerhalb eines zweiten Abstands von einem äußeren Umfangsende beinhaltet, das eine Grenze zwischen dem Dach (1a) und der äußeren Umfangsfläche (1b, 1c) ist.

6. Fahrzeugsensormontagestruktur nach Anspruch 1, wobei das Objekt (50, 60) einen Fußgänger, ein Fahrrad oder ein Motorrad beinhaltet, die sich in unmittelbarer Nähe des Fahrzeugs (1) befinden.

7. Fahrzeugsensormontagestruktur nach Anspruch 2, wobei die Montagehöhe eine Höhe von einer Oberfläche der Straße zu einem Fotorezeptor oder einem Mittelpunkt der Langstrecken-LiDAR-Vorrichtung (10, 11) ist.

8. Fahrzeugsensormontagestruktur nach Anspruch 2, wobei:
die Langstrecken-LiDAR-Vorrichtung (10, 11) über eine Halterung an dem Fahrzeug (1) montiert ist; und
die Montagehöhe, die eine Höhe von einer Oberfläche der Straße zu einem Fotorezeptor oder einem Mittelpunkt der Langstrecken-LiDAR-Vorrichtung (10, 11) ist, die über die Halterung an dem Fahrzeug (1) montiert ist, nicht weniger als 1,8 m beträgt.

9. Fahrzeugsensormontagestruktur nach einem der vorhergehenden Ansprüche, wobei:
die Höhe des Fahrzeugs (1) nicht weniger als 1,8 m beträgt.

10. Fahrzeugsensormontagestruktur nach einem der vorhergehenden Ansprüche, wobei:
das Fahrzeug (1) ein Mikrobus-ähnliches Fahrzeug oder ein Transporter-ähnliches Fahrzeug ist.

## Revendications

1. Structure de montage de capteur de véhicule comprenant :
un véhicule (1) ; et
un dispositif LiDAR (10, 11) monté sur une partie de bord périphérique d'un toit (la) du véhicule (1),
le dispositif LiDAR ayant une plage de détection (Ra, Rc) s'étendant en diagonale vers le bas vue depuis le toit (1a),
le dispositif LiDAR étant configuré pour détecter un objet (50, 60) dans une plage de détection (Ra, Rc), et **caractérisée en ce que**
la plage de détection (Ra, Rc) comprend une partie d'une face périphérique extérieure (1b, 1c) d'une carrosserie du véhicule, et
le dispositif LiDAR étant un dispositif LiDAR longue portée ayant une limite inférieure de distance de détection qui n'est pas inférieure à 10 cm et pas supérieure à 1 m.

2. Structure de montage de capteur de véhicule selon la revendication 1, dans laquelle une hauteur de montage du dispositif LiDAR longue portée (10, 11) n'est pas inférieure à 1,8 m.

3. Structure de montage de capteur de véhicule selon la revendication 1 ou 2, dans laquelle un angle de détection du dispositif LiDAR longue portée (10, 11) est inférieur à 180°.

4. Structure de montage de capteur de véhicule selon la revendication 1, dans laquelle la partie de bord périphérique du toit (1a) comprend une partie du toit (1a) à une première distance d'une extrémité périphérique extérieure qui est une limite entre le toit (1a) et la face périphérique extérieure (1b, 1c).

5. Structure de montage de capteur de véhicule selon la revendication 1, dans laquelle la partie de bord périphérique du toit (1a) comprend une partie de la face périphérique extérieure (1b, 1c) à une deuxième distance à partir d'une extrémité périphérique extérieure qui est une limite entre le toit (1a) et la face périphérique extérieure (1b, 1c).

6. Structure de montage de capteur de véhicule selon la revendication 1, dans laquelle l'objet (50,60) comprend un piéton, un vélo ou une moto, à proximité immédiate du véhicule (1).

7. Structure de montage de capteur de véhicule selon la revendication 2, dans laquelle la hauteur de montage est une hauteur depuis une surface de route jusqu'à un photorécepteur ou un point central du dispositif LiDAR longue portée (10, 11).

8. Structure de montage de capteur de véhicule selon la revendication 2, dans laquelle :
le dispositif LiDAR longue portée (10, 11) est monté sur le véhicule (1) par l'intermédiaire d'un support ; et
la hauteur de montage qui est une hauteur depuis une surface de route jusqu'à un photorécepteur ou un point central du dispositif LiDAR longue portée (10, 11) monté sur le véhicule (1) via le support n'est pas inférieure à 1,8 m.

9. Structure de montage de capteur de véhicule selon l'une quelconque des revendications précédentes, dans laquelle :
la hauteur du véhicule (1) n'est pas inférieure à 1,8 m.

10. Structure de montage de capteur de véhicule selon l'une quelconque des revendications précédentes, dans laquelle :
le véhicule (1) est un véhicule de type microbus ou un véhicule de type fourgon.
